# EUROPEAN PATENT SPECIFICATION

(11) **EP 3 686 827 B1**
(45) Date of publication and mention of the grant of the patent: **03.09.2025**
(21) Application number: 18858056.7
(22) Date of filing: 18.09.2018
(51) Int. Cl.: G06Q 20/32, G06Q 20/38

(54) **INFORMATION DISPLAY METHOD AND APPARATUS, STORAGE MEDIUM AND ELECTRONIC DEVICE**
VERFAHREN UND VORRICHTUNG ZUR INFORMATIONSANZEIGE, SPEICHERMEDIUM UND ELEKTRONISCHE VORRICHTUNG
PROCÉDÉ ET APPAREIL D'AFFICHAGE D'INFORMATIONS, SUPPORT DE STOCKAGE, ET DISPOSITIF ÉLECTRONIQUE

(30) Priority: 21.09.2017 CN 201710860475
(43) Date of publication of application: 29.07.2020
(73) Proprietor: Tencent Technology (Shenzhen) Company Limited, Shenzhen, Guangdong, 518057 (CN)
(72) Inventor: ZHANG, Haiba, Shenzhen Guangdong 518057 (CN)
(74) Representative: Novagraaf International SA
(86) International application number: PCT/CN2018/106174
(87) International publication number: WO 2019/057029

(56) References cited:
- CN-A- 106 845 266
- CN-A- 107 038 007
- US-A- 5 862 347
- US-A1- 2012 330 845
- US-A1- 2016 226 839

## Description

### Technical Field

The present application relates to Internet technologies, and in particular to a method and an apparatus for displaying information, a storage medium and an electronic apparatus.

### Background

With the development of Internet technologies, mobile payment has gradually become an indispensable part of people's life. Mobile payment, also called mobile phone payment, is a service in which users use their mobile terminals (usually mobile phones) to pay for goods or services they consume. A company or an individual may directly or indirectly send a payment instruction to a bank financial institution via mobile equipment, the Internet or a proximity sensor to perform currency payment and fund transfer, thereby realizing a mobile payment function. Mobile payment may integrate terminal equipment, the Internet, application providers and financial institutions to provide users with financial services such as currency payment and fee payment.

Mobile payment may be realized by displaying a payment code via communication software (for example, instant messaging software) and payment software. However, there are following defects in the current process of using the payment code to make payment. While a user is waiting for payment, the payment code is exposed on a mobile terminal, and thus is easy to be screenshot by a background application or shot by someone else's camera. Besides, since the payment code is used for offline payment, the payment can be completed directly via the payment code without verifying the identity of the user in most payment scenarios. As a result, once the payment code is obtained by others, it can be used for shopping, thereby resulting in fund loss of the user.

US 2012/330845 A1 relates to secure transmission of data by displaying graphical animations.

At present, no effective solution has been proposed yet to solve the problem of low security in the mobile payment mode in the related art.

### Summary

Embodiments of the present application provide a method and apparatus for displaying information, a storage medium and an electronic apparatus, so as to at least solve the problem of low security in the mobile payment mode in the related art.

According to the embodiments of the present application, a method for displaying information is provided. The method includes: acquiring, by a terminal, resource transfer information, wherein the resource transfer information is used for transferring resources; splitting, by the terminal, the resource transfer information into resource transfer sub-information, wherein the number of pieces of the resource transfer sub-information is a first preset number; and displaying, by the terminal, a dynamic image for indicating the resource transfer sub-information, wherein the number of pieces of the resource transfer sub-information indicated by information displayed on the dynamic image at one playing time is a second preset number, and the second preset number is smaller than the first preset number.

According to the embodiments of the present application, an apparatus for displaying information is also provided. The apparatus includes: an acquiring unit, configured to acquire resource transfer information, wherein the resource transfer information is used for transferring resources; a splitting unit, configured to split the resource transfer information into resource transfer sub-information, wherein the number of pieces of the resource transfer sub-information is a first preset number; and a displaying unit, configured to display a dynamic image for indicating the resource transfer sub-information, so that a target device recognizes the resource transfer sub-information indicated by information displayed at each playing time from the dynamic image and splices the resource transfer sub-information into the resource transfer information according to a preset sequence, wherein the number of pieces of the resource transfer sub-information indicated by information displayed on the dynamic image at one playing time is a second preset number, and the second preset number is smaller than the first preset number.

According to the embodiments of the present application, a storage medium is also provided. The storage medium is configured to store a program which when executed to perform the method for displaying information in the above embodiments.

According to the embodiments of the present application, an electronic apparatus is also provided. The electronic apparatus includes storage, a processor and a computer program stored in the storage and executed by the processor, wherein the processor is configured to execute the computer program to perform the method for displaying information in the above embodiments.

In the embodiments of the present application, after acquiring the resource transfer information, the terminal splits the resource transfer information into the resource transfer sub-information. The number of pieces of the resource transfer sub-information is a first preset number. The terminal displays a dynamic image for indicating the resource transfer sub-information, so that a target device recognizes the resource transfer sub-information indicated by the information displayed at each playing time from the dynamic image, and splices the resource transfer sub-information into the resource transfer information according to a preset sequence. Each piece of the resource transfer sub-information is represented by the information displayed on the dynamic image at one playing time, and the number of pieces of the resource transfer sub-information indicated by the information displayed on the dynamic image at one playing time is a second preset number. The second preset number is smaller than the first preset number. The dynamic image only displays part of the resource transfer sub-information at one playing time, thereby solving the problem of low security in the mobile payment mode in the related art and further improving the security of the mobile payment.

### Brief Description of the Drawings

Drawings described herein are used for further understanding the present application, which constitute a part of the present application. The schematic embodiments of the present application and illustrations thereof are used to explain the present application and do not constitute an improper limitation on the present application. In the drawings:
Fig. 1 is a diagram of a hardware environment used for a method for displaying information according to embodiments of the present application.
Fig. 2 is a flowchart of a method for displaying information according to embodiments of the present application.
Fig. 3 is a diagram of resource transfer information according to embodiments of the present application.
Fig. 4 is a diagram of a target pattern according to embodiments of the present application.
Fig. 5 is a flowchart of a method for displaying information according to embodiments of the present application.
Fig. 6 is a diagram of an apparatus for displaying information according to embodiments of the present application.
Fig. 7 is a diagram of an apparatus for displaying information according to embodiments of the present application.
Fig. 8 is a block diagram of the structure of a terminal according to embodiments of the present application.

### Detailed Description

In order to enable those skilled in the art to better understand the present application, the technical solutions in the embodiments of the present application will be described clearly and completely below in conjunction with the accompanying drawings. Apparently, the embodiments described herein are only some embodiments of the present application, but are not all embodiments. Based on the embodiments of the present application, all other embodiments obtained by those skilled in the art without creative labor shall fall within the protection scope of the present application.

The terms "first" and "second" described in the specification, the claims and the above accompanying drawings are used to distinguish similar objects, but are not used to describe a particular or sequential order. It should be understood that the terms "first" and "second" may be exchanged in some embodiments, and thus these embodiments may be implemented in an executing order different from those of the embodiments described herein. Furthermore, the terms "includes" and "comprises", as well as any variations thereof, mean "includes but not limited to", for example, a process, method, system, product or device that contains a series of steps or modules is not necessarily limited to those steps or modules expressly listed, but may include other steps or modules not expressly listed or inherent to such a process, method, product or device.

First, some nouns or terms appearing in the embodiments of the present application are applicable to the following explanations.

Payment code: a series of numbers with special meaning, which is presented in the form of a Quick Response (QR) code or a barcode, and is mainly used for offline payment. When used, a user terminal displays the payment code, and a merchant scans the payment code with a scanning gun to realize deduction.

According to the embodiments of the present application, a method for displaying information is provided.

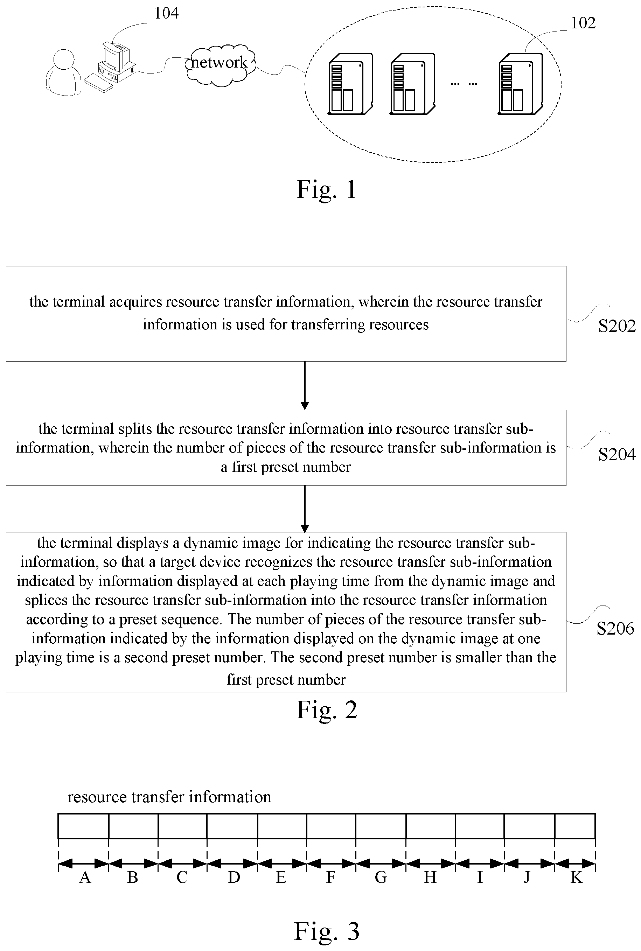

In the embodiments, the method for displaying information may be applied to a hardware environment composed of a server 102 and a terminal 104 as shown in Fig. 1. As shown in Fig. 1, the server 102 is connected to the terminal 104 via a network. The network includes but is not limited to, a Wide Area Network (WAN), a Metropolitan Area Network (MAN) or a Local Area Network (LAN), and the terminal 104 includes but is not limited to, a Personal Computer (PC), a mobile phone, a tablet computer, etc. The method for displaying information in the embodiments of the present application may be executed by the server 102, may also be executed by the terminal 104, or may also be executed jointly by the server 102 and the terminal 104. The method for displaying information executed by the terminal 104 in the embodiments of the present application may also be executed by a client installed in the terminal.

When the method for displaying information in the embodiments of the present application is executed by the server or the terminal, a program code corresponding to the method of the present application may be directly executed by the server or the terminal.

When the method for displaying information in the embodiments of the present application is executed jointly by the server and the terminal, the terminal sends resource transfer information to the server, and then the server executes the program code corresponding to the method of the present application and returns a splitting result (a first preset number of pieces of resource transfer sub-information) to the terminal for display.

Hereinafter, the program code corresponding to the method of the present application being executed by the terminal will be described as an example. Fig. 2 is a flowchart of a method for displaying information according to embodiments of the present application. As shown in Fig. 2, the method may include following steps.

At step S202, the terminal acquires resource transfer information, wherein the resource transfer information is used for transferring resources.

In some embodiments, the resource transfer information may be generated by the terminal or the server and displayed by the terminal. For example, when generated by the terminal (such as a mobile terminal), the resource transfer information is acquired. The resource transfer information is used for transferring resources of an account in the terminal. For another example, when the resource transfer information is generated by the server, the terminal acquires the resource transfer information from the server.

The resource transfer information is credential information for transferring resources, and can be carried by the following modes, which include but are not limited to, carrying by text or digital information, carrying by pattern information and carrying by identification information.

The aforementioned resources may be virtual resources, which include but are not limited to, stocks, funds, capital, bonds, gold coins, red envelopes and coupons. Any device with a resource transfer authority may transfer the virtual resources of an account in the device by using the resource transfer information.

At step S204, the terminal splits the resource transfer information into resource transfer sub-information, wherein the number of pieces of the resource transfer sub-information is a first preset number.

At step S206, the terminal displays a dynamic image for indicating the resource transfer sub-information, so that a target device recognizes the resource transfer sub-information indicated by information displayed at each playing time from the dynamic image and splices the resource transfer sub-information into the resource transfer information according to a preset sequence. The number of pieces of the resource transfer sub-information indicated by the information displayed on the dynamic image at one playing time is a second preset number. The second preset number is smaller than the first preset number.

Each piece of the resource transfer sub-information is represented by the information displayed on the dynamic image at one playing time. The information displayed on the dynamic image at one playing time may represent one piece of the resource transfer sub-information, and may also represent the second preset number of pieces of the resource transfer sub-information, which is more than one but less than the total number of pieces. It can be understood that the information displayed on the dynamic image at one playing time does not represent the total number of pieces of the resource transfer sub-information, but only a part of the total number of pieces of the resource transfer sub-information.

In some embodiments, the dynamic image for indicating the resource transfer sub-information may be displayed on a mobile terminal. Each piece of the resource transfer sub-information may be represented by the information displayed on the dynamic image at one playing time (the total number of pieces is the first preset number), and the information displayed on the dynamic image at one playing time represents one piece of the resource transfer sub-information.

The dynamic image is an image displayed on a display interface of the terminal, and may be displayed in a full-screen form on the display interface, or may be displayed in a partial area of the display interface.

The information displayed at any playing time may be one piece of the resource transfer sub-information, may also be at least one piece of the resource transfer sub-information, wherein the number of pieces of the resource transfer sub-information is less than the total number of pieces of the resource transfer sub-information, and may also be blank information or other information except the resource transfer sub-information.

In some embodiments, the dynamic image may be a dynamic picture. In the process of displaying the dynamic image on the mobile terminal, since the dynamic image is displayed dynamically, focusing is required for the shooting of the dynamic image, and thus the dynamic image is not easy to be shot by other devices. In addition, since only part of the resource transfer information (i.e. one piece of the resource transfer sub-information or less than the total number of pieces of the resource transfer sub-information) can be displayed at any playing time, people taking pictures secretly are unable to transfer resources by using the part of the resource transfer sub-information.

According to steps S202 to S206, after acquiring the resource transfer information, the terminal splits the resource transfer information into the resource transfer sub-information. The total number of pieces of the resource transfer sub-information is the first preset number. The terminal displays the dynamic image indicating the resource transfer sub-information, wherein each piece of the resource transfer sub-information is represented by the information displayed on the dynamic image at one playing time. That is, one piece of the resource transfer sub-information or less than the total number of pieces of the resource transfer sub-information is displayed at any playing time, thereby solving the problem of low security in the mobile payment mode in the related art and further improving the security of the mobile payment.

Embodiments of the present application will be described in detail below with reference to the steps shown in Fig 2.

In the technical solution provided in step S202, the terminal (e.g., a mobile terminal) acquires the resource transfer information, wherein the resource transfer information is used for transferring resources.

When there is resource transfer requirement, the mobile terminal generates the resource transfer information.

If a payment event (i.e., an event requiring payment with funds) is detected on the mobile terminal, the mobile terminal acquires a payment code generated by it according to an account. The resource transfer information includes the payment code, via which the mobile terminal may complete payment.

If a resource transfer event (for example, the transfer of virtual resources such as stocks, funds, bonds, gold coins, red envelopes and coupons) of the account is detected on the mobile terminal, the mobile terminal acquires the resource transfer information generated by it according to the account, so as to transfer the virtual resources to the account, or transfer the virtual resources of the account to other accounts by taking the resource transfer information as a credential.

In the technical solution provided in step S204, the terminal splits the resource transfer information into the resource transfer sub-information, and the number of pieces of the resource transfer sub-information is the first preset number. The first preset number of pieces of the resource transfer sub-information means that the number of pieces of the resource transfer sub-information is more than one (excluding one) , for example, 2 or 4 pieces.

At step S2042, the terminal detects the timeliness of the resource transfer information.

In some embodiments, in order to ensure the security of resource transfer, the credential information of each resource transfer (i.e., the resource transfer information has timeliness) is detected. Therefore, before splitting the resource transfer information into the resource transfer sub-information, the terminal detects the timeliness of the acquired resource transfer information to determine whether the resource transfer information is within the time limit allowed by the timeliness (for example, the resource transfer information is valid within a specified duration after being generated, such as 30 seconds, 1 minute, 2 minutes and so on).

If the timeliness of the acquired resource transfer information is invalid (i.e., the resource transfer information exceeds the time limit allowed by the timeliness), the terminal reacquires the resource transfer information and splits the reacquired resource transfer information into the resource transfer sub-information.

If the timeliness of the acquired resource transfer information is valid, the terminal directly splits the resource transfer information into the resource transfer sub-information.

At step S2042, the terminal splits the resource transfer information into the resource transfer sub-information. The splitting methods include but are not limited to the following methods.

In a first method, the resource transfer information is split into the resource transfer sub-information according to a specified information length.

The terminal splits the resource transfer information into the resource transfer sub-information according to a preset information length. If the information length of the resource transfer information is not an integer multiple of the preset information length, the information length of one piece of the resource transfer sub-information is a remainder obtained by dividing the information length of the resource transfer information by the preset information length.

For example, if the information length of the resource transfer information is 1080 bits and the preset information length is 100 bits, the resource transfer information may be split into 11 pieces of the resource transfer sub-information (A to K as shown in Fig. 3). The information length of 10 pieces of the resource transfer sub-information (A to J) is 100 bits and the information length of the last one piece (K) is 80 bits. Each piece of the resource transfer sub-information is carried in a first picture. The carrying methods include, but are not limited to, carrying by a QR code and carrying by a barcode. In some embodiments, the resource transfer information such as an account and resource information (the type and amount of resources to be transferred) may be compiled into a QR code or a barcode.

The first preset number of the first pictures may be displayed in the same order as the splitting sequence of the resource transfer sub-information (i.e., from A to K). For example, among the first preset number of the first pictures, the first picture carrying A is displayed at the first place, the first picture carrying B is displayed at the second place, and so on.

If the first preset number of the first pictures are displayed in an order different from the splitting sequence of the resource transfer sub-information, the splitting sequence of the resource transfer sub-information carried by the first picture needs to be labeled in the first picture. For example, for the first picture carrying A, it needs to be labeled in the carrying information (such as a QR code or a barcode) that the splitting sequence of the resource transfer sub-information is the first; and for the first picture carrying B, it needs to be labeled in the carrying information that the splitting sequence of the resource transfer sub-information is the second, and so on.

In a second method, the resource transfer information is split into the resource transfer sub-information according to the specified number of pieces of resource transfer sub-information.

The terminal splits the resource transfer information into the resource transfer sub-information. The number of splitting pieces is the same as the first preset number. In this method, the length of each piece of resource transfer sub-information may be different from that of another.

In some embodiment, in the technical solution provided in step S204, the terminal may also carry the resource transfer sub-information in the dynamic image with a following manner.

The terminal uses a first key (which may be a certain unchangeable key or one of a plurality of keys selected by the terminal) to encrypt the resource transfer sub-information according to a preset encryption algorithm, and carries the encrypted resource transfer sub-information in a certain picture in the form of a QR code or a barcode.

A method for decrypting the encrypted resource transfer sub-information may refer to the following description.

In the technical solution provided in step S206, the terminal displays the dynamic image for indicating the resource transfer sub-information, so that the target device recognizes the resource transfer sub-information indicated by the information displayed at each playing time from the dynamic image and splices the resource transfer sub-information into the resource transfer information according to a preset sequence. The number of pieces of the resource transfer sub-information indicated by the information displayed on the dynamic image at one playing time is a second preset number, and the second preset number is smaller than the first preset number.

The dynamic image may include the first preset number of the first pictures that are displayed according to a preset sequence. If the dynamic image for indicating the first preset number of pieces of the resource transfer sub-information is to be displayed, the first preset number of the first pictures may be first displayed on the mobile terminal according to the preset sequence, and then each piece of the resource transfer sub-information is displayed on one of the first pictures.

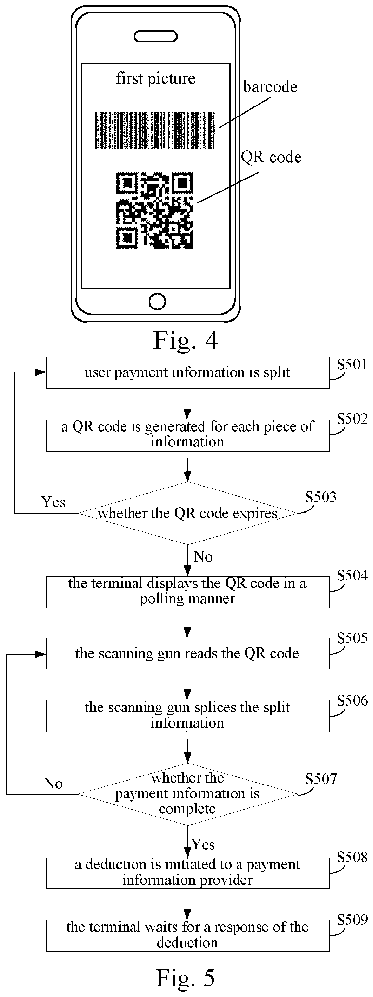

In some embodiments, the first preset number of the first pictures being displayed on the mobile terminal according to the preset sequence may refer to displaying the first pictures carrying target patterns on the mobile terminal according to the preset sequence. As shown in Fig. 4, a target pattern in each of the first pictures is used for indicating one piece of the resource transfer sub-information. The target pattern may include a barcode and/or a QR code.

The embodiments of the present application may further include step S208.

In the technical solution provided in step S208, when the terminal displays the dynamic image for indicating the resource transfer sub-information, the target device (e.g., a scanning gun) recognizes the resource transfer sub-information indicated by the information displayed on the dynamic image at each playing time, splices the resource transfer sub-information into the resource transfer information according to the preset sequence, and transfers resources (such as resources of an account registered on the terminal) according to the resource transfer information.

In some embodiments, the first preset number of sub-pictures (the first pictures) are displayed on the mobile terminal with a preset duration as a display cycle, wherein the display durations of any two sub-pictures within the display cycle are the same.

If the resource transfer sub-information indicated by the first picture is unencrypted information, the target device may directly acquire the resource transfer sub-information and slice the resource transfer sub-information into the resource transfer information.

If the resource transfer sub-information indicated by the first picture is encrypted information, the target device needs to decrypt the resource transfer sub-information.

In a process of decrypting the resource transfer sub-information, the target device needs to communicate with the mobile terminal to acquire a corresponding decryption key and/or decryption algorithm, so as to decrypt the resource transfer sub-information with the decryption key and the decryption algorithm.

The process of acquiring the corresponding decryption key and/or decryption algorithm by the target device is actually a verification process of the target device. For example, the target device sends a request to the mobile terminal (including but not limited to sending the request via a server or via a near-field communication mode such as Bluetooth and NFC), and then the mobile terminal sends the corresponding decryption key and/or decryption algorithm to the target device after verifying the target device successfully.

In some embodiments, in order to improve the security of transaction, several pictures carrying false resource transfer sub-information may be set. During the transaction, only after the target device is verified successfully, the mobile terminal sends an identification of a picture carrying true resource transfer sub-information to the target device, so that the target device performs resource transfer.

In the embodiments of the present application, the proposed method may be applied to the following scenarios, which include but are not limited to: (1) mobile payment for bills on the mobile terminal, (2) transactions of virtual resources (such as funds and stocks), and (3) distribution of virtual resources (such as gold coins and red envelopes).

The embodiments of the present application will be described in detail by taking the mobile payment as an example.

After a user enters a payment code interface, the payment code always changes dynamically. When the scanning gun is aligned with the payment code, the scanning gun can acquire complete payment information within one polling cycle and finish the payment. In this way, the security of the payment code can be improved when the payment code is used offline, thereby preventing the payment code being stolen by others to cause the loss of user's funds. Fig. 5 is shown as follows.

At step S501, user payment information (i.e., resource transfer information) is split.

The terminal splits the user payment information with a following method. The terminal and the scanning gun (i.e. a target device) agree on a splitting and combination protocol, and the terminal divides the user payment information (a character string) into 20 pieces averagely according to a sequence moving length, wherein the length of the last piece may be less than an average length.

At step S502, a QR code is generated for each piece of information (i.e., resource transfer sub-information).

The terminal generates one QR code for each piece of information obtained through splitting, and the QR code has timeliness.

At step S503, it is checked whether the QR code expires.

It is checked whether the QR code has expired. If the QR code is invalid, return to step S501 for re-splitting; otherwise, proceed to the next step S504.

At step S504, the terminal displays the QR code in a polling manner (i.e. displays a first preset number of first pictures).

At step S505, the scanning gun reads the QR code.

At step S506, the scanning gun splices the split information according to the protocol agreed with the terminal in advance that "the terminal divides the user payment information (a character string) into 20 pieces averagely according to a sequence moving length, wherein the length of the last piece may be less than an average length".

At step S507, it is checked whether the payment information is complete. If yes, perform the next step S508; otherwise, return to step S505.

At step S508, a deduction is initiated to a payment information provider if the payment information is complete. Otherwise, the QR code is read again. During the reading process, the QR code may become invalid, and a user needs to wait for the generation and display of a valid QR code.

At step S509, the terminal waits for a response of the deduction.

In the embodiments, dozens of QR codes are displayed in a polling manner after a user enters the payment code interface, so the user may see a dynamically changing QR code. When the scanning gun is aligned with the payment code, the scanning gun obtains part of the payment information from the dozens of QR codes within one polling cycle of the payment code. When the complete payment information is successfully combined, the scanning gun prompts the completion of code-scanning via a sound. When obtaining the complete payment information, the scanning gun informs the terminal displaying the payment code to proceed to an interface waiting for payment completion via a network.

A conventional payment code is a static picture containing complete payment information of a user. When the user stays on the payment code interface, it is possible that the payment code is screenshot by a background application or shot by someone else's camera. Leakage of the payment code may cause funds loss of the user.

In the above embodiments, dozens of QR codes (or barcodes) are dynamically displayed with a fixed duration (e.g., 1 second) as a polling cycle, wherein each of the QR codes includes a part of the user's payment information. In this way, the complete payment information cannot be leaked even if the payment code is screenshot or shot, thereby improving the security of payment using the payment codes.

For simplicity of description, the foregoing method embodiments are all described as a series of action combinations, but those skilled in the art should understand that the present application will not be limited to the described sequence of the actions because some of the steps can be performed in another sequence or concurrently according to the present application. Besides, those skilled in the art should also understand that the embodiments described in the specification are some selected embodiments, and the actions and modules involved are not necessarily required in the present application.

According to the above description of the embodiments, it can be clearly understood by those skilled in the art that the methods provided according to the above embodiments can be realized by software accompanying with necessary general hardware platforms, or by hardware. In many cases, the former is a preferred manner. Based on this, the essential part of the technical solution of the present application or the part contributed to the prior art can be implemented in the form of a software product, and the computer software product is stored in a storage medium (such as a ROM/RAM, a magnetic disk and an optical disk) and includes several codes to make a terminal device (such as a mobile phone, a computer, a server or a network device) perform the methods in embodiments of the present application.

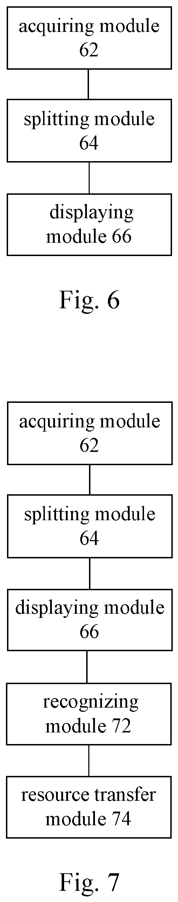

According to the embodiments of the present application, an apparatus for displaying information is also provided, which can implement the above method for displaying information. Fig. 6 is a diagram of an apparatus for displaying information according to embodiments of the present application. As shown in Fig. 6, the apparatus may include an acquiring module 62, a splitting module 64, and a displaying module 66.

The acquiring module 62 is configured to acquire resource transfer information, wherein the resource transfer information is used for transferring resources.

The splitting module 64 is configured to split the resource transfer information into resource transfer sub-information, wherein the number of pieces of the resource transfer sub-information is a first preset number.

The displaying module 66 is configured to display a dynamic image for indicating the resource transfer sub-information, so that a target device recognizes the resource transfer sub-information indicated by information displayed at each playing time from the dynamic image and splices the resource transfer sub-information into the resource transfer information according to a preset sequence. The number of pieces of the resource transfer sub-information indicated by the information displayed on the dynamic image at one playing time is a second preset number. The second preset number is smaller than the first preset number.

In some embodiments, the dynamic image for indicating the resource transfer sub-information may be displayed on a mobile terminal. Each piece of the resource transfer sub-information may be represented by the information displayed on the dynamic image at one playing time.

The dynamic image is an image displayed on a display interface of the terminal, and may be displayed in a full-screen form on the display interface, or may be displayed in a partial area of the display interface.

In some embodiments, the dynamic image may be a dynamic picture. In the process of displaying the dynamic image on the mobile terminal, since the dynamic image is displayed dynamically, focusing is required for the shooting of the dynamic image, and thus the dynamic image is not easy to be shot by other devices. In addition, since only part of the resource transfer information can be displayed at any time, people taking pictures secretly are unable to transfer resources by using the part of the resource transfer sub-information.

The acquiring module 62 may execute step S202 in the embodiments of the present application, the splitting module 64 may execute step S204 in the embodiments of the present application, and the displaying module 66 may execute step S206 in the embodiments of the present application.

The examples and application scenarios achieved by the above modules are the same as those achieved by the corresponding steps, but are not limited to the disclosure of the above embodiments. The above modules, as a part of the apparatus, may be operated in the hardware environment as shown in Fig. 1, and may be implemented via software or hardware.

Through the above modules, after acquiring the resource transfer information, the terminal splits the resource transfer information into the resource transfer sub-information. The total number of pieces of the resource transfer sub-information is the first preset number. The terminal displays the dynamic image for indicating the resource transfer sub-information, so that the target device recognizes the resource transfer sub-information indicated by the information displayed at each playing time from the dynamic image and splices the resource transfer sub-information into the resource transfer information according to the preset sequence. Each piece of the resource transfer sub-information is represented by the information displayed on the dynamic image at one playing time. That is, one piece of the resource transfer sub-information or less than the total number of pieces of the resource transfer sub-information is displayed at any playing time, thereby solving the problem of low security in the mobile payment mode in the related art and further improving the security of the mobile payment.

In some embodiments, when there is resource transfer requirement, the mobile terminal generates the resource transfer information.

If a payment event is detected on the mobile terminal, the acquiring module acquires a payment code generated by the mobile terminal according to an account. The resource transfer information includes the payment code.

If a resource transfer event (for example, the transfer of virtual resources such as stocks, funds, bonds, gold coins, red envelopes and coupons) of the account is detected on the mobile terminal, the acquiring module acquires the resource transfer information generated by the mobile terminal according to the account, so as to transfer the virtual resources to the account, or transfer the virtual resources of the account to other accounts by taking the resource transfer information as a credential.

In some embodiments, the splitting module 64 splits the resource transfer information into the resource transfer sub-information, which can be achieved by the following steps.

At step S2042, the timeliness of the resource transfer information is detected.

In some embodiments, in order to ensure the security of resource transfer, the credential information of each resource transfer (i.e., the resource transfer information has timeliness) is detected. Therefore, before splitting the resource transfer information into the first preset number of pieces of the resource transfer sub-information, the terminal detects the timeliness of the acquired resource transfer information to determine whether the resource transfer information is within the time limit allowed by the timeliness (for example, the resource transfer information is valid within a specified duration after being generated, such as 30 seconds, 1 minute, 2 minutes and so on).

If the timeliness of the acquired resource transfer information is invalid (i.e., the resource transfer information exceeds the time limit allowed by the timeliness), the terminal reacquires the resource transfer information and splits the reacquired resource transfer information into the resource transfer sub-information.

If the timeliness of the acquired resource transfer information is valid, the splitting module 64 directly splits the resource transfer information into the resource transfer sub-information.

At step S2042, the resource transfer information is split into the resource transfer sub-information. The splitting methods include but are not limited to the following methods.

In a first method, the resource transfer information is split into the resource transfer sub-information according to a specified information length.

The splitting module 64 splits the resource transfer information into the resource transfer sub-information according to a preset information length. If the information length of the resource transfer information is not an integer multiple of the preset information length, the information length of one piece of the resource transfer sub-information is a remainder obtained by dividing the information length of the resource transfer information by the preset information length.

For example, if the information length of the resource transfer information is 1080 bits and the preset information length is 100 bits, the resource transfer information may be split into 11 pieces of the resource transfer sub-information (A to K as shown in Fig. 3). The information length of 10 pieces of the resource transfer sub-information (A to J) is 100 bits and the information length of the last one piece (K) is 80 bits. Each piece of the resource transfer sub-information is carried in a first picture. The carrying methods include, but are not limited to, carrying by a QR code and carrying by a barcode. In some embodiments, the resource transfer information such as an account and resource information (the type and amount of resources to be transferred) may be compiled into a QR code or a barcode.

The first preset number of the first pictures may be displayed in the same order as the splitting sequence of the resource transfer sub-information (i.e., from A to K). For example, among the first preset number of the first pictures, the first picture carrying A is displayed at the first place, the first picture carrying B is displayed at the second place, and so on.

If the first preset number of the first pictures are displayed in an order different from the splitting sequence of the resource transfer sub-information, the splitting sequence of the resource transfer sub-information carried by the first picture needs to be labeled in the first picture. For example, for the first picture carrying A, it needs to be labeled in the carrying information (such as a QR code or a barcode) that the splitting sequence of the resource transfer sub-information is the first; and for the first picture carrying B, it needs to be labeled in the carrying information that the splitting sequence of the resource transfer sub-information is the second, and so on.

In a second method, the resource transfer information is split into the resource transfer sub-information according to the specified number of pieces of resource transfer sub-information.

The splitting module 64 splits the resource transfer information into the resource transfer sub-information. The number of splitting pieces is the same as the first preset number. In this method, the length of each piece of resource transfer sub-information may be different from that of another.

In some embodiment, the dynamic image may include the first preset number of the first pictures that are displayed according to a preset sequence. The displaying module 66 is further configured to display the first preset number of the first pictures according to the preset sequence, and each piece of the resource transfer sub-information is displayed on one of the first pictures.

The displaying module 66 is further configured to display the first pictures carrying target patterns according to the preset sequence. A target pattern in each of the first pictures is used for indicating one piece of the resource transfer sub-information. The target pattern may include a barcode and/or a QR code.

The acquiring module 62 is further configured to acquire a payment code generated by the mobile terminal according to the account when a payment event is detected on the mobile terminal. The resource transfer information may include the payment code.

In some embodiments, as shown in Fig.7, the apparatus proposed by the present application may further include: a recognizing module 72, configured to recognize the resource transfer sub-information indicated by the information displayed on the dynamic image at each playing time when the dynamic image for indicating the resource transfer sub-information is displayed; and a resource transfer module 74, configured to splice the resource transfer sub-information into the resource transfer information according to the preset sequence and transfer resources according to the resource transfer information. The recognizing module 72 and the resource transfer module 74 may be located in the target device.

In some embodiments, the first preset number of sub-pictures (the first pictures) are displayed on the mobile terminal with a preset duration as a display cycle, wherein the display durations of any two sub-pictures within the display cycle are the same.

If the resource transfer sub-information indicated by the first picture is unencrypted information, the target device may directly acquire the resource transfer sub-information and splice the resource transfer sub-information into the resource transfer information.

If the resource transfer sub-information indicated by the first picture is encrypted information, the target device needs to decrypt the resource transfer sub-information.

In a process of decrypting the resource transfer sub-information, the target device needs to communicate with the mobile terminal to acquire a corresponding decryption key and/or decryption algorithm, so as to decrypt the resource transfer sub-information with the decryption key and the decryption algorithm.

The process of acquiring the corresponding decryption key and/or decryption algorithm by the target device is actually a verification process of the target device. For example, the target device sends a request to the mobile terminal (including but not limited to sending the request via a server or via a near-field communication mode such as Bluetooth and NFC), and then the mobile terminal sends the corresponding decryption key and/or decryption algorithm to the target device after verifying the target device successfully.

In some embodiments, in order to improve the security of transaction, several pictures carrying false resource transfer sub-information may be set. During the transaction, only after the target device is verified successfully, the mobile terminal sends an identification of a picture carrying true resource transfer sub-information to the target device, so that the target device performs resource transfer.

In the embodiments of the present application, the proposed method may be applied to the following scenarios, which include but are not limited to: (1) mobile payment for bills on the mobile terminal, (2) transactions of virtual resources (such as funds and stocks), and (3) distribution of virtual resources (such as gold coins and red envelopes).

In the embodiments of the present application, dozens of QR codes are displayed in a polling manner after a user enters the payment code interface, so the user may see a dynamically changing QR code. When the scanning gun is aligned with the payment code, the scanning gun obtains part of the payment information from the dozens of QR codes within one polling cycle of the payment code. When the complete payment information is successfully combined, the scanning gun prompts the completion of code-scanning via a sound. When obtaining the complete payment information, the scanning gun informs the terminal displaying the payment code to proceed to an interface waiting for payment completion via a network.

A conventional payment code is a static picture containing complete payment information of a user. When the user stays on the payment code interface, it is possible that the payment code is screenshot by a background application or shot by someone else's camera. Leakage of the payment code may cause funds loss of the user.

In the above embodiments, dozens of QR codes (or barcodes) are dynamically displayed with a fixed duration (e.g., 1 second) as a polling cycle, wherein each of the QR codes includes a part of the user's payment information. In this way, the complete payment information cannot be leaked even if the payment code is screenshot or shot, thereby improving the security of payment using the payment codes.

The examples and application scenarios achieved by the above modules are the same as those achieved by the corresponding steps, but are not limited to the disclosure of the above embodiments. The modules, as a part of an apparatus, may be operated in the hardware environment as shown in Fig. 1, and may be implemented via software or hardware. The hardware environment includes a network environment.

According to the embodiments of the present application, a server or a terminal for implementing the above method for displaying information is also provided.

According to the embodiments of the present application, a storage medium is also provided. The storage medium may store a program. When the program is executed, the method for displaying information described in the above embodiments can be implemented.

According to the embodiments of the present application, an electronic apparatus is also provided. The electronic apparatus includes storage, a processor and a computer program which is stored in the storage and may be executed by the processor. Through executing the computer program by the processor, the method for displaying information described in the above embodiments can be implemented.

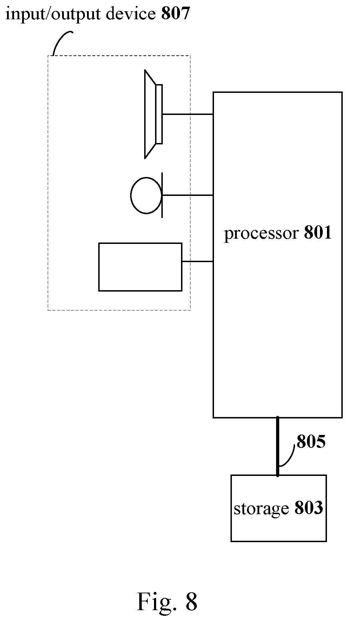

Fig. 8 is a block diagram of the structure of a terminal according to embodiments of the present application. As shown in Fig. 8, the terminal may include: one or more (only one is shown in Fig. 8) processors 801, storage 803 and a transmission device 805 (for example, a sending apparatus in the above embodiments). As shown in Fig. 8, the terminal may further include an input/output device 807.

The storage 803 may store software programs and modules, such as program instructions/modules corresponding to the method and apparatus for displaying information in the embodiments of the present application. The processor 801 performs various functional applications and data processing through executing the software programs and modules stored in the storage 803, that is, implements the method for displaying information. The storage 803 may include a high-speed random access memory, and may also include a non-transitory memory such as one or more magnetic storage apparatus, a flash memory or other non-transitory solid state memories. In some examples, the storage 803 may also include memories deployed remotely relative to the processor 801. These remote memories may be connected to the terminal via a network. The network includes but is not limited to, the Internet, an intranet, a local area network, a mobile communications network, and combinations thereof.

The transmission device 805 may receive or transmit data via a network and may transmit data between the processor and the storage. Examples of the network may include a wired network and a wireless network. In one example, the transmission device 805 includes a Network Interface Controller (NIC) that may be connected to a router or other network devices via a cable to communicate with the Internet or the local area network. In one example, the transmission device 805 is a Radio Frequency (RF) module for communicating with the Internet in a wireless mode.

The storage 803 may be used to store an application program.

The processor 801 may invoke the application program stored in the storage 803 via the transmission device 805 to perform the following steps of:
S1: acquiring resource transfer information, wherein the resource transfer information is used for transferring resources;
S2: splitting the resource transfer information into resource transfer sub-information, wherein the number of pieces of the resource transfer sub-information is a first preset number; and
S3: displaying a dynamic image for indicating the resource transfer sub-information, so that a target device recognizes the resource transfer sub-information indicated by information displayed at each playing time from the dynamic image and splices the resource transfer sub-information into the resource transfer information according to a preset sequence, wherein the number of pieces of the resource transfer sub-information indicated by the information displayed on the dynamic image at one playing time is a second preset number, and the second preset number is smaller than the first preset number.

The processor 801 is also configured to perform the following steps of:
splitting the resource transfer information into the resource transfer sub-information according to a preset information length, wherein if the information length of the resource transfer information is not an integer multiple of the preset information length, the information length of one piece of the resource transfer sub-information is a remainder obtained by dividing the information length of the resource transfer information by the preset information length; or,
splitting the resource transfer information into the first preset number of pieces of the resource transfer sub-information, wherein the first preset number is the same as the preset number of first pictures in the dynamic image.

According to the embodiments of the present application, the resource transfer information is split into the resource transfer sub-information after being acquired. The total number of pieces of the resource transfer sub-information is the first preset number. A dynamic image for indicating the resource transfer sub-information is displayed, so that the target device recognizes the resource transfer sub-information indicated by the information displayed at each playing time from the dynamic image and splices the resource transfer sub-information into the resource transfer information according to the preset sequence. The number of pieces of the resource transfer sub-information indicated by the information displayed on the dynamic image at one playing time is a second preset number. The second preset number is smaller than the first preset number. In this way, the problem of low security in the mobile payment mode in the related art can be solved and the security of the mobile payment can be improved.

Some examples in the embodiments may refer to the examples described in the above embodiments and will not be described in detail herein.

It can be understood by those skilled in the art that the structure shown in Fig. 8 is only illustrative, and the terminal may be a smart phone (e.g., an Android phone, an iOS phone, etc.), a tablet computer, a handheld computer, a Mobile Internet Device (MID), a PAD and other terminal devices. Fig. 8 does not limit the structure of the above electronic apparatus. For example, the terminal may also include more or less components (e.g., a network interface and a display device) than those shown in Fig. 8, or have a different configuration from that shown in Fig. 8.

It can be understood by those of skilled in the art that all or part of the steps in various methods of the foregoing embodiments can be implemented by instructing related hardware of the terminal device by a program. The program may be stored in a computer-readable storage medium, which may include a flash disk, a Read-Only Memory (ROM), a Random Access Memory (RAM), a magnetic disk, an optical disk and the like.

The embodiments of the present application also provide a storage medium. In some embodiments, the storage medium may store a program code for implementing the method for displaying information.

In some embodiments, the storage medium may be located on at least one of a plurality of network devices in the network shown in the above embodiments.

In some embodiments, the storage medium is configured to store a program code for implementing the following steps of:
S11: acquiring resource transfer information, wherein the resource transfer information is used for transferring resources;
S12: splitting the resource transfer information into resource transfer sub-information, wherein the number of pieces of the resource transfer sub-information is a first preset number; and
S13: displaying a dynamic image for indicating the resource transfer sub-information, so that a target device recognizes the resource transfer sub-information indicated by information displayed at each playing time from the dynamic image and splices the resource transfer sub-information into the resource transfer information according to a preset sequence, wherein the number of pieces of the resource transfer sub-information indicated by the information displayed on the dynamic image at one playing time is a second preset number, and the second preset is smaller than the first preset number.

In some embodiments, the storage medium is also configured to store a program code for implementing the following steps of:
S21: splitting the resource transfer information into the resource transfer sub-information according to a preset information length, wherein if the information length of the resource transfer information is not an integer multiple of the preset information length, the information length of one piece of the resource transfer sub-information is a remainder obtained by dividing the information length of the resource transfer information by the preset information length; or,
S23: splitting the resource transfer information into the resource transfer sub-information, wherein the number of pieces of the resource transfer sub-information is the same as the preset number of first pictures in the dynamic image.

Some examples in the embodiments may refer to the examples described in the above embodiments and will not be described in detail herein.

In some embodiments, the storage medium may include, but is not limited to, a U-disk, a ROM, a RAM, a removable hard disk, a magnetic or optical disk, and other various media which can store a program code.

The serial numbers in the above embodiments of the present application are only used for description, but do not represent the advantages and disadvantages of the embodiments.

If the integrated module in the above embodiments is implemented by software function units and is sold or used as an exclusive product, the integrated module may be stored in the computer-readable storage medium. Based on this, the essential part of the technical solution of the present application, or the part contributed to the prior art, or all or part of the technical solution can be implemented in the form of a computer software product. The computer software product may be stored in a storage medium and may include several instructions to make one or more computer devices (such as a personal computer, a server or a network device) perform all or part of the steps of the methods described in the various embodiments of the present application.

In the above embodiments of the present application, the description of each embodiment has its own emphasis, and parts that are not described in detail in a certain embodiment may refer to relevant description in other embodiments.

In the embodiments provided in the present application, it should be understood that the disclosed terminal can be implemented in other ways. The apparatus embodiments described above are only illustrative, for example, the division of modules described herein is merely a logical function division. In actual implementation, there may be other division manners. For example, a plurality of modules or components may be combined or may be integrated into another system, or some features may be omitted or not performed. In addition, the displayed or discussed mutual coupling or direct coupling or communication connection may also be indirect coupling or communication connection through some interfaces, units or modules, and may also be implemented in an electrical form or other forms.

The units described as separate components may or may not be physically separated, and the components shown as units may or may not be physical units, i.e., may be located at one place or may be distributed on a plurality of network units. Some or all of the units may be selected according to actual requirements to achieve the objective of the solutions of the embodiments.

In addition, various functional units in various embodiments of the present application may be integrated in one processing unit, or each of the units may exist separately and physically, or two or more units may be integrated in one unit. The integrated unit may be implemented in the form of hardware or in the form of software functional unit.

The foregoing are some embodiments of the present application. It should be noted that for those of skilled in the art, without departing from the principle of the present application, several improvements and modifications can be made, and the improvements and modifications should be covered in the protection scope of the invention.

### Industrial Applicability

In the embodiments, after acquiring resource transfer information, a terminal splits the resource transfer information into resource transfer sub-information. The number of pieces of the resource transfer sub-information is a first preset number. The terminal displays a dynamic image for indicating the resource transfer sub-information, so that a target device recognizes the resource transfer sub-information indicated by information displayed at each playing time from the dynamic image and splices the resource transfer sub-information into the resource transfer information according to a preset sequence. Each piece of the resource transfer sub-information is represented by the information displayed on the dynamic image at one playing time, and the number of pieces of the resource transfer sub-information indicated by the information displayed on the dynamic image at one playing time is a second preset number. The second preset number is smaller than the first preset number. The dynamic image only displays part of the resource transfer sub-information at one playing time, thereby improving the security of mobile payment.

## Claims

1. A method for displaying information, comprising:
acquiring, by a terminal, resource transfer information, wherein the resource transfer information is used for transferring resources;
detecting, by the terminal, the timeliness of the resource transfer information;
on condition that a timeliness of the acquired resource transfer information is invalid,
reacquiring, by the terminal, the resource transfer information;
on condition that a timeliness of the acquired resource transfer information is valid,
splitting, by the terminal, the resource transfer information into resource transfer sub-information, wherein number of pieces of the resource transfer sub-information is a first preset number; and
displaying, by the terminal, a dynamic image for indicating the resource transfer sub-information, wherein number of pieces of the resource transfer sub-information indicated by information displayed on the dynamic image at one playing time is a second preset number, and the second preset number is smaller than the first preset number.

2. The method of claim 1, wherein the dynamic image comprises the first preset number of first pictures displayed according to a preset sequence, and the displaying the dynamic image for indicating the resource transfer sub-information comprises:
displaying, by the terminal, the first preset number of the first pictures according to the preset sequence, wherein each piece of the resource transfer sub-information is displayed on one of the first pictures.

3. The method of claim 2, wherein the displaying, by the terminal, the first preset number of the first pictures according to the preset sequence comprises:
displaying, by the terminal, the first pictures carrying target patterns according to the preset sequence, wherein a target pattern in each of the first pictures is used to indicate one piece of the resource transfer sub-information, and the target pattern comprises a barcode and/or a Quick Response, QR, code.

4. The method of claim 1, wherein the splitting, by the terminal, the resource transfer information into the resource transfer sub-information comprises:
splitting, by the terminal, the resource transfer information into the first preset number of pieces of the resource transfer sub-information according to a preset information length, wherein if information length of the resource transfer information is not an integer multiple of the preset information length, information length of one piece of the resource transfer sub-information is a remainder obtained by dividing the information length of the resource transfer information by the preset information length.

5. The method of claim 1, wherein the splitting, by the terminal, the resource transfer information into the resource transfer sub-information comprises:
splitting, by the terminal, the resource transfer information into the resource transfer sub-information according to a specified number of pieces of resource transfer sub-information, wherein length of each piece of the resource transfer sub-information may be different from that of another piece of the resource transfer sub-information.

6. The method of claim 1, when the terminal displays the dynamic image for indicating the resource transfer sub-information, further comprising:
recognizing, by a target device, the resource transfer sub-information indicated by information displayed on the dynamic image at each playing time; and
splicing, by the target device, the resource transfer sub-information into the resource transfer information according to the preset sequence, and transferring the resources according to the resource transfer information.

7. An apparatus for displaying information, comprising:
an acquiring module, configured to acquire resource transfer information, wherein the resource transfer information is used for transferring resources;
a detecting module, configured to detect a timeliness of the resource transfer information, and on condition that a timeliness of the acquired resource transfer information is invalid,
reacquiring, by the acquiring module, the resource transfer information;
a splitting module, configured to split the resource transfer information into resource transfer sub-information, wherein number of pieces of the resource transfer sub-information is a first preset number; and
a displaying module, configured to display a dynamic image for indicating the resource transfer sub-information, so that a target device recognizes the resource transfer sub-information indicated by information displayed at each playing time from the dynamic image and splices the resource transfer sub-information into the resource transfer information according to a preset sequence, wherein number of pieces of the resource transfer sub-information indicated by information displayed on the dynamic image at one playing time is a second preset number, and the second preset number is smaller than the first preset number.

8. The apparatus of claim 7, wherein the dynamic image comprises the first preset number of first pictures displayed according to the preset sequence, and the displaying module is further configured to display the first preset number of the first pictures according to the preset sequence, wherein each piece of the resource transfer sub-information is displayed on one of the first pictures.

9. The apparatus of claim 8, wherein the displaying unit is further configured to display the first pictures carrying target patterns according to the preset sequence, wherein a target pattern in each of the first picture is used to indicate one piece of the resource transfer sub-information, and the target pattern comprises a barcode and/or a Quick Response, QR, code.

10. The apparatus of claim 7, wherein the splitting module is configured to split the resource transfer information into the first preset number of pieces of the resource transfer sub-information according to a preset information length, wherein if information length of the resource transfer information is not an integer multiple of the preset information length, information length of one piece of the resource transfer sub-information is a remainder obtained by dividing the information length of the resource transfer information by the preset information length.

11. The apparatus of claim 7, wherein the splitting module is configured to split the resource transfer information into the resource transfer sub-information according to a specified number of pieces of resource transfer sub-information, wherein length of each piece of the resource transfer sub-information may be different from that of another piece of the resource transfer sub-information.

12. A storage medium, configured to store a program which when executed to perform the method of any of claims 1 to 6.

13. An electronic apparatus, comprising storage, a processor and a computer program stored in the storage and executed by the processor, wherein the processor is configured to execute the computer program to perform the method of any of claims 1 to 6.

## Patentansprüche

1. Verfahren zum Anzeigen von Informationen, umfassend:
Erfassen, durch ein Endgerät, von Ressourcenübertragungsinformationen, wobei die Ressourcenübertragungsinformationen zum Übertragen von Ressourcen verwendet werden;
Feststellen, durch das Endgerät, der Aktualität der Ressourcenübertragungsinformationen;
unter der Bedingung, dass eine Aktualität der erfassten Ressourcenübertragungsinformationen ungültig ist,
erneutes Erfassen, durch das Endgerät, der Ressourcenübertragungsinformationen;
unter der Bedingung, dass eine Aktualität der erfassten Ressourcenübertragungsinformationen gültig ist,
Teilen, durch das Endgerät, der Ressourcenübertragungsinformationen in Ressourcenübertragungsunterinformationen, wobei eine Anzahl von Elementen der Ressourcenübertragungsunterinformationen eine erste voreingestellte Anzahl ist; und
Anzeigen, durch das Endgerät, eines dynamischen Bildes zum Angeben der Ressourcenübertragungsunterinformationen, wobei die Anzahl von Elementen der Ressourcenübertragungsunterinformationen, die von Informationen angegeben wird, die auf dem dynamischen Bild zu einem Abspielzeitpunkt angezeigt werden, eine zweite vorbestimmte Anzahl ist, und die zweite voreingestellte Anzahl kleiner als die erste voreingestellte Anzahl ist.

2. Verfahren nach Anspruch 1, wobei das dynamische Bild eine erste voreingestellte Anzahl von ersten Bildern umfasst, die gemäß einer voreingestellten Folge angezeigt werden, und das Anzeigen des dynamischen Bildes zum Angeben der Ressourcenübertragungsunterinformationen umfasst:
Anzeigen, durch das Endgerät, der ersten voreingestellten Anzahl der ersten Bilder gemäß der voreingestellten Folge, wobei jedes Element der Ressourcenübertragungsunterinformationen auf einem der ersten Bilder angezeigt wird.

3. Verfahren nach Anspruch 2, wobei das Anzeigen, durch das Endgerät, der ersten voreingestellten Anzahl der ersten Bilder gemäß der voreingestellten Folge umfasst:
Anzeigen, durch das Endgerät, der ersten Bilder, die Zielmuster gemäß der voreingestellten Folge tragen, wobei ein Zielmuster in jedem der ersten Bilder verwendet wird, um ein Element der Ressourcenübertragungsunterinformationen anzugeben, und das Zielmuster einen Strichcode und/oder einen Quick Response, QR, Code umfasst.

4. Verfahren nach Anspruch 1, wobei das Teilen, durch das Endgerät, der Ressourcenübertragungsinformationen in die Ressourcenübertragungsunterinformationen umfasst:
Teilen, durch das Endgerät, der Ressourcenübertragungsinformationen in die erste voreingestellte Anzahl von Elementen der Ressourcenübertragungsunterinformationen gemäß einer voreingestellten Informationslänge, wobei, wenn die Informationslänge der Ressourcenübertragungsinformationen nicht ein ganzzahliges Vielfaches der voreingestellten Informationslänge ist, die Informationslänge eines Elements der Ressourcenübertragungsunterinformationen ein Rest ist, der durch Dividieren der Informationslänge der Ressourcenübertragungsinformationen durch die voreingestellte Informationslänge erhalten wird.

5. Verfahren nach Anspruch 1, wobei das Teilen, durch das Endgerät, der Ressourcenübertragungsinformationen in die Ressourcenübertragungsunterinformationen umfasst:
Teilen, durch das Endgerät, der Ressourcenübertragungsinformationen in die Ressourcenübertragungsunterinformationen gemäß einer angegebenen Anzahl von Elementen von Ressourcenübertragungsunterinformationen, wobei eine Länge jedes Elements der Ressourcenübertragungsunterinformationen sich von derjenigen eines anderen Elements der Ressourcenübertragungsunterinformationen unterscheiden kann.

6. Verfahren nach Anspruch 1, das, wenn das Endgerät das dynamische Bild zum Angeben der Ressourcenübertragungsunterinformationen anzeigt, ferner umfasst:
Erkennen, durch eine Zielvorrichtung, der Ressourcenübertragungsunterinformationen, die von den Informationen angegeben werden, die zu jedem Abspielzeitpunkt auf dem dynamischen Bild angezeigt werden; und
Zusammenführen, durch die Zielvorrichtung, der Ressourcenübertragungsunterinformationen zu den Ressourcenübertragungsinformationen gemäß der voreingestellten Folge und Übertragen der Ressourcen gemäß den Ressourcenübertragungsinformationen.

7. Vorrichtung zum Anzeigen von Informationen, umfassend:
ein Erfassungsmodul, das dazu ausgestaltet ist, Ressourcenübertragungsinformationen zu erfassen, wobei die Ressourcenübertragungsinformationen zum Übertragen von Ressourcen verwendet werden;
ein Feststellungsmodul, das dazu ausgestaltet ist, eine Aktualität der Ressourcenübertragungsinformationen festzustellen, und, unter der Bedingung, dass eine Aktualität der erfassten Ressourcenübertragungsinformationen ungültig ist, die Ressourcenübertragungsinformationen erneut durch das Erfassungsmodul zu erfassen;
ein Teilungsmodul, das dazu ausgestaltet ist, die Ressourcenübertragungsinformationen in Ressourcenübertragungsunterinformationen zu teilen, wobei eine Anzahl der Ressourcenübertragungsunterinformationen eine erste voreingestellte Anzahl ist; und
ein Anzeigemodul, das dazu ausgestaltet ist, ein dynamisches Bild zum Angeben der Ressourcenübertragungsunterinformationen derart anzuzeigen, dass eine Zielvorrichtung die Ressourcenübertragungsunterinformationen, die von Informationen angegeben werden, die zu jedem Abspielzeitpunkt angezeigt werden, von dem dynamischen Bild erkennt und die Ressourcenübertragungsunterinformationen gemäß einer voreingestellten Folge zu den Ressourcenübertragungsinformationen zusammenführt, wobei eine Anzahl von Elementen der Ressourcenübertragungsunterinformationen, die von Informationen angegeben werden, die auf dem dynamischen Bild zu einem Abspielzeitpunkt angezeigt werden, eine zweite voreingestellte Anzahl ist und die zweite voreingestellte Anzahl kleiner als die erste voreingestellte Anzahl ist.

8. Vorrichtung nach Anspruch 7, wobei der dynamische Bereich die erste voreingestellte Anzahl von ersten Bildern umfasst, die gemäß der voreingestellten Folge angezeigt werden, und das Anzeigemodul ferner dazu ausgestaltet ist, die erste voreingestellte Anzahl der ersten Bilder gemäß der voreingestellten Folge anzuzeigen, wobei jedes Element der Ressourcenübertragungsunterinformationen auf einem von den ersten Bildern angezeigt wird.

9. Vorrichtung nach Anspruch 8, wobei die Anzeigeeinheit ferner dazu ausgestaltet ist, die ersten Bilder, die Zielmuster tragen, gemäß der voreingestellten Folge anzuzeigen, wobei ein Zielmuster in jedem von dem ersten Bild verwendet wird, um ein Element der Ressourcenübertragungsunterinformationen anzugeben, und das Zielmuster einen Strichcode und/oder einen Quick Response, QR, Code umfasst.

10. Vorrichtung nach Anspruch 7, wobei das Teilungsmodul dazu ausgestaltet ist, die Ressourcenübertragungsinformationen in die erste voreingestellte Anzahl von Elementen der Ressourcenübertragungsunterinformationen gemäß einer voreingestellten Informationslänge zu teilen, wobei, wenn eine Informationslänge der Ressourcenübertragungsinformationen kein ganzzahliges Vielfaches der voreingestellten Informationslänge ist, die Informationslänge eines Elements der Ressourcenübertragungsunterinformationen ein Rest ist, der durch Dividieren der Informationslänge der Ressourcenübertragungsinformationen durch die voreingestellte Informationslänge erhalten wird.

11. Vorrichtung nach Anspruch 7, wobei das Teilungsmodul dazu ausgestaltet ist, die Ressourcenübertragungsinformationen in die Ressourcenübertragungsunterinformationen gemäß einer angegebenen Anzahl von Elementen von Ressourcenübertragungsunterinformationen zu teilen, wobei eine Länge jedes Elements der Ressourcenübertragungsunterinformationen sich von derjenigen eines anderen Elements der Ressourcenübertragungsunterinformationen unterscheiden kann.

12. Speichermedium, das dazu ausgestaltet ist, ein Programm zu speichern, das, wenn es ausgeführt wird, das Verfahren nach einem der Ansprüche 1 bis 6 durchführt.

13. Elektronische Vorrichtung, die Speicher, einen Prozessor und ein Computerprogramm umfasst, das in dem Speicher gespeichert und von dem Prozessor ausgeführt wird, wobei der Prozessor dazu ausgestaltet ist, das Computerprogramm auszuführen, um das Verfahren nach einem der Ansprüche 1 bis 6 durchzuführen.

## Revendications

1. Procédé d'affichage d'informations, comprenant :
l'acquisition, par un terminal, d'informations de transfert de ressources, dans lequel les informations de transfert de ressources sont utilisées pour transférer des ressources ;
la détection, par le terminal, de l'actualité des informations de transfert de ressources ;
à la condition qu'une actualité des informations de transfert de ressources acquises n'est pas valide, l'acquisition à nouveau, par le terminal, des informations de transfert de ressources ;
à la condition qu'une actualité des informations de transfert de ressources acquises est valide, la division, par le terminal, des informations de transfert de ressources en sous-informations de transfert de ressources, dans lequel le nombre de sous-informations de transfert de ressources est un premier nombre prédéfini ; et
l'affichage, par le terminal, d'une image dynamique pour indiquer les sous-informations de transfert de ressources, dans lequel le nombre de sous-informations de transfert de ressources indiquées par les informations affichées sur l'image dynamique à un temps de lecture est un deuxième nombre prédéfini, et le deuxième nombre prédéfini est plus petit que le premier nombre prédéfini.

2. Procédé de la revendication 1, dans lequel l'image dynamique comprend le premier nombre prédéfini de premières photos affichées selon une séquence prédéfinie, et l'affichage de l'image dynamique pour indiquer les sous-informations de transfert de ressources comprend :
l'affichage, par le terminal, du premier nombre prédéfini de premières photos selon la séquence prédéfinie, dans lequel chacune des sous-informations de transfert de ressources est affichée sur une des premières photos.

3. Procédé de la revendication 2, dans lequel l'affichage, par le terminal, du premier nombre prédéfini de premières photos selon la séquence prédéfinie comprend :
l'affichage, par le terminal, des premières photos contenant des motifs cibles selon la séquence prédéfinie, dans lequel un motif cible dans chacune des premières photos est utilisé pour indiquer une sous-information des sous-informations de transfert de ressources, et le motif cible comprend un code-barres et/ou un code de réponse rapide, QR.

4. Procédé de la revendication 1, dans lequel la division, par le terminal, des informations de transfert de ressources en sous-informations de transfert de ressources comprend :
la division, par le terminal, des informations de transfert de ressources en le premier nombre prédéfini de sous-informations de transfert de ressources selon une longueur d'information prédéfinie, dans lequel, si la longueur d'information des informations de transfert de ressources n'est pas un multiple entier de la longueur d'information prédéfinie, la longueur d'information d'une sous-information des sous-informations de transfert de ressources est un reste obtenu en divisant la longueur d'information des informations de transfert de ressources par la longueur d'information prédéfinie.

5. Procédé de la revendication 1, dans lequel la division, par le terminal, des informations de transfert de ressources en sous-informations de transfert de ressources comprend :
la division, par le terminal, des informations de transfert de ressources en sous-informations de transfert de ressources selon un nombre spécifié de sous-informations de transfert de ressources, dans lequel une longueur de chacune des sous-informations de transfert de ressources peut être différente de celle d'une autre des sous-informations de transfert de ressources.

6. Procédé de la revendication 1, lorsque le terminal affiche l'image dynamique pour indiquer les sous-informations de transfert de ressources, comprenant en outre :
la reconnaissance, par un dispositif cible, des sous-informations de transfert de ressources indiquées par les informations affichées sur l'image dynamique à chaque temps de lecture ; et
l'épissure, par le dispositif cible, des sous-informations de transfert de ressources en informations de transfert de ressources selon la séquence prédéfinie, et le transfert des ressources selon les informations de transfert de ressources.

7. Appareil d'affichage d'informations, comprenant :
un module d'acquisition configuré pour acquérir des informations de transfert de ressources, dans lequel les informations de transfert de ressources sont utilisées pour transférer des ressources ;
un module de détection configuré pour détecter une actualité des informations de transfert de ressources, et à la condition qu'une actualité des informations de transfert de ressources acquises n'est pas valide, acquérir à nouveau, par le module d'acquisition, les informations de transfert de ressources ;
un module de division configuré pour diviser les informations de transfert de ressources en sous-informations de transfert de ressources, dans lequel le nombre de sous-informations de transfert de ressources est un premier nombre prédéfini ; et
un module d'affichage configuré pour afficher une image dynamique pour indiquer les sous-informations de transfert de ressources, de sorte qu'un dispositif cible reconnaisse les sous-informations de transfert de ressources indiquées par les informations affichées à chaque temps de lecture à partir de l'image dynamique et divise les sous-informations de transfert de ressources en informations de transfert de ressources selon une séquence prédéfinie, dans lequel le nombre de sous-informations de transfert de ressources indiquées par les informations affichées sur l'image dynamique à un temps de lecture est un deuxième nombre prédéfini, et le deuxième nombre prédéfini est plus petit que le premier nombre prédéfini.

8. Appareil de la revendication 7, dans lequel l'image dynamique comprend le premier nombre prédéfini de premières photos affichées selon la séquence prédéfinie, et le module d'affichage est en outre configuré pour afficher le premier nombre prédéfini de premières photos selon la séquence prédéfinie, dans lequel chacune des sous-informations de transfert de ressources est affichée sur une des premières photos.

9. Appareil de la revendication 8, dans lequel l'unité d'affichage est en outre configurée pour afficher les premières photos contenant des motifs cibles selon la séquence prédéfinie, dans lequel un motif cible dans chacune des premières photos est utilisé pour indiquer une sous-information des sous-informations de transfert de ressources, et le motif cible comprend un code-barres et/ou un code de réponse rapide, QR.

10. Appareil de la revendication 7, dans lequel le module de division est configuré pour diviser les informations de transfert de ressources en le premier nombre prédéfini de sous-informations de transfert de ressources selon une longueur d'information prédéfinie, dans lequel, si la longueur d'information des informations de transfert de ressources n'est pas un multiple entier de la longueur d'information prédéfinie, la longueur d'information d'une sous-information des sous-informations de transfert de ressources est un reste obtenu en divisant la longueur d'information des informations de transfert de ressources par la longueur d'information prédéfinie.

11. Appareil de la revendication 7, dans lequel le module de division est configuré pour diviser les informations de transfert de ressources en sous-informations de transfert de ressources selon un nombre spécifié de sous-informations de transfert de ressources, dans lequel une longueur de chacune des sous-informations de transfert de ressources peut être différente de celle d'une autre des sous-informations de transfert de ressources.

12. Support de stockage, configuré pour stocker un programme qui, lorsqu'il est exécuté met en œuvre le procédé de l'une des revendications 1 à **6.**

13. Appareil électronique, comprenant un stockage, un processeur et un programme informatique stocké dans le stockage et exécuté par le processeur, dans lequel le processeur est configuré pour exécuter le programme informatique pour mettre en œuvre le procédé de l'une des revendications 1 à 6.
